(19) Europäisches Patentamt
European Patent Office
Office européen des brevets

(11) **EP 4 790 758 A1**

(12) **EUROPEAN PATENT APPLICATION**

(43) Date of publication:
**12.08.2026 Bulletin 2026/33**

(21) Application number: **26157847.0**

(22) Date of filing: **11.02.2026**

(51) International Patent Classification (IPC):
***H01M 4/133*** (2010.01) ***H01M 4/134*** (2010.01)
***H01M 4/36*** (2006.01) ***H01M 4/38*** (2006.01)
***H01M 4/587*** (2010.01)

(52) Cooperative Patent Classification (CPC):
**H01M 4/134; H01M 4/133; H01M 4/362; H01M 4/364; H01M 4/366; H01M 4/386; H01M 4/587;** H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.02.2025 KR 20250017188**
**30.09.2025 KR 20250142134**

(71) Applicant: **SAMSUNG SDI CO., LTD.**
**Yongin-si, Gyeonggi-do 17084 (KR)**

(72) Inventors:
- **KIM, Deok-Hyun**
  **17084 Gyeonggi-do (KR)**
- **KIM, Hyejin**
  **17084 Gyeonggi-do (KR)**
- **KIM, YOUNGUGK**
  **17084 Gyeonggi-do (KR)**
- **KANG, Eunji**
  **17084 Gyeonggi-do (KR)**
- **OH, Doori**
  **17084 Gyeonggi-do (KR)**
- **KIM, Jaewon**
  **17084 Gyeonggi-do (KR)**
- **LEE, Banseok**
  **17084 Gyeonggi-do (KR)**
- **KIM, Yookyung**
  **17084 Gyeonggi-do (KR)**

(74) Representative: **Michalski Hüttermann & Partner mbB**
**Kaistraße 16A**
**40221 Düsseldorf (DE)**

# (54) NEGATIVE ELECTRODE, RECHARGEABLE LITHIUM BATTERY INCLUDING THE NEGATIVE ELECTRODE, AND ELECTRICAL DEVICE CONTAINING THE LITHIUM BATTERY

(57) A negative electrode for a rechargeable lithium battery comprises a negative electrode current collector and a negative electrode active material layer on the negative electrode current collector. The negative electrode active material layer includes a first negative electrode active material, a second negative electrode active material, a binder, and a conductive material. The first negative electrode active material is in the form of particles that each comprise silicon nanoparticles aggregated together and an amorphous carbon coating layer surrounding the silicon nanoparticles. The particles of the first negative electrode active material have a sphericity (S) of about 0.9 to about 1.0. The second negative electrode active material comprises crystalline carbon. The negative electrode active material layer has a mixture density of more than about 1.6 g/cc to not more than about 1.7 g/cc.

FIG. 1

ELL
Li+
COL1 AML1
10
30
COL2 AML2
20



Processed by Luminess, 75001 PARIS (FR)

**Description**

CROSS-REFERENCE TO RELATED APPLICATIONS

This U.S. nonprovisional application claims priority under 35 U.S.C § 119 to Korean Patent Application No. 10-2025-0142134 filed on September 30, 2025, and Korean Patent Application No. 10-2025-0017188 filed on February 11, 2025, in the Korean Intellectual Property Office, the disclosures of which are hereby incorporated by reference in their entirety.

BACKGROUND

The present disclosure relates to a negative electrode, a rechargeable lithium battery including the negative electrode, and an electrical device including the lithium battery.

With the rapid proliferation of battery-powered electronic devices such as mobile phones, notebook computers, and electric vehicles, the demand for rechargeable batteries with high energy density and large capacity has been increasing significantly. In response, extensive research and development efforts have been made to enhance the performance of rechargeable lithium batteries.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

SUMMARY

The present disclosure provides a negative electrode having high density, low resistance, and low expansion rate.

The present disclosure also provides a rechargeable lithium battery having a long lifetime.

In an embodiment of the present disclosure, a negative electrode includes a negative electrode current collector and a negative electrode active material layer on the negative electrode current collector, wherein the negative electrode active material layer includes: a first negative electrode active material in a form of particles each including a plurality of silicon nanoparticles aggregated together and an amorphous carbon coating layer surrounding the silicon nanoparticles, the particles of the first negative electrode active material have a sphericity (S) of $\geq 0.9$ to $\leq 1.0$; a second negative electrode active material including crystalline carbon; a binder; and a conductive agent, wherein the negative electrode active material layer may have a mixture density of more than about 1.6 g/cc and not more than about 1.7 g/cc.

In an embodiment of the present disclosure, a rechargeable lithium battery may include the aforementioned negative electrode, a positive electrode; and a separator between the negative electrode and the positive electrode.

In an embodiment of the present disclosure, an electrical device includes the aforementioned rechargeable lithium battery.

BRIEF DESCRIPTION OF DRAWINGS

FIG. 1 is a rechargeable lithium battery according to an embodiment of the present disclosure.

FIGS. 2 to 5 are cross-sectional views of rechargeable lithium batteries according to an embodiments, wherein FIG. 2 is a cylindrical type, FIG. 3 is a prismatic type, and FIGS. 4 and 5 are pouch-type batteries.

FIG. 6 is a cross-sectional view a negative electrode for rechargeable lithium battery according to an embodiment of the present disclosure.

FIG. 7 is an enlarged view of the negative electrode active material layer according to an embodiment of the present disclosure.

FIG. 8 is a cross-sectional of the first negative electrode active material according to an embodiment of the present disclosure.

FIG. 9 is a graph showing pore distribution according to an embodiment of the present disclosure.

FIGS. 10 and 11 are cross-sectional views of negative electrodes for rechargeable lithium batteries according to further embodiments of the present disclosure.

FIG. 12 is an enlarged view of the negative electrode active material layer according to a comparative example of the present disclosure.

FIGS. 13 and 14 are graphs illustrating the distribution of pores within the negative electrode active material layer

according to a comparative example of the present disclosure.

FIG. 15 is a scanning electron microscopy (SEM) image of the first negative electrode active material of Example 1.

FIG. 16 is a scanning electron microscopy (SEM) image of the third negative electrode active material of Comparative example.

FIG. 17 is a scanning electron microscopy (SEM) image of a cross-section of the negative electrode according to Example 1.

FIG. 18 is a scanning electron microscopy (SEM) image of a cross-section of the negative electrode according to a comparative example.

FIG. 19 shows the expansion rate results of the negative electrode according to Example 1 and the comparative example.

FIG. 20 shows the capacity retention results of the rechargeable lithium batteries including Example 1 and the comparative example.

DETAILED DESCRIPTION OF EMBODIMENTS

To fully understand the configuration and effects of the present disclosure, some embodiments will be described with reference to the accompanying drawings. However, the present disclosure is not limited to the following exemplary embodiments and may be implemented in various forms. The exemplary embodiments are provided solely to illustrate the present disclosure and to enable those skilled in the art to fully understand its full scope.

In this description, when an element is described as being "on" another element, it may be directly on the other element, or one or more intervening elements may be present. In the drawings, certain thicknesses may be exaggerated to better illustrate technical details. Throughout the specification, like reference numerals indicate like elements.

The embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The embodiments described and illustrated herein include complementary variations.

The terms used in this description serve only to explain various embodiments and are not intended to limit the present disclosure. Unless explicitly stated otherwise, singular forms may also include plural forms. The terms "comprises/includes" and "comprising/including" do not exclude the presence or addition of one or more other components.

In this description, the phrase "combination thereof" may refer to a mixture, a stack, a composite, a copolymer, an alloy, a blend, or a reaction product.

In this description, an average particle diameter may be obtained by methods commonly used in the art. For example, the average particle diameter may be determined by analyzing images obtained using a Transmission Electron Microscope (TEM) or a Scanning Electron Microscope (SEM), or by using measurement equipment based on the dynamic light scattering (DLS) method. For example, the average particle diameter may represent a value indicative of the particle size distribution, such as the D50 (median diameter). The D50 refers to the particle diameter at which the cumulative volume reaches 50 vol% in the particle size distribution, and may be referred to as the average particle diameter (D50). For example, the D50 may be measured using a particle size analyzer or by employing the laser diffraction method. In the case of measurement by laser diffraction, more specifically, the particles to be measured are dispersed in a dispersion medium and introduced into a commercially available laser diffraction particle size measuring device (for example, Microtrac MT 3000, Microtrac Inc.). After irradiating the sample with ultrasonic waves at approximately 28 kHz and an output power of 60 W, the average particle diameter (D50) may be calculated based on the 50% point of the particle size distribution obtained from the measuring device.

The phrases "A or B," "at least one of A and B," "at least one of A or B," "A, B, or C," "at least one of A, B, and C," and "at least one of A, B, or C" include any one or all possible combinations of the listed elements.

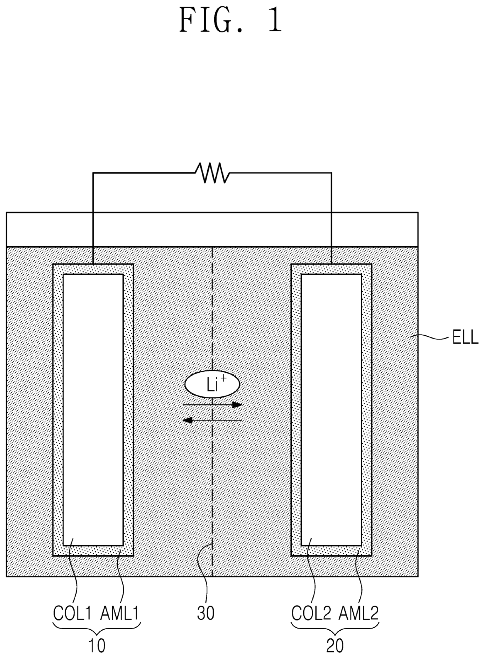

FIG. 1 illustrates a rechargeable lithium battery according to an embodiment of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other with the separator 30 therebetween. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated with the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and may further include a binder and/or a conductive material. The positive electrode 10 may further include an additive that functions as a sacrificial positive electrode.

An amount of the positive electrode active material in the positive electrode active material layer AML1 may be ≥ 90 wt% to ≤ 99 wt% based on 100 wt% of the positive electrode active material layer AML1. An amount of each of the binder and the conductive material may be ≥ 0.5 wt% to ≤ 5 wt% based on 100 wt% of the positive electrode active material layer AML1.

The binder serves to attach the positive electrode active material particles to each other and also to attach the positive electrode active material to the current collector COL1. Examples of the binder include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, and the like. But the present disclosure is not limited to these examples.

The conductive material may be used to impart conductivity to the electrode. Any material that does not cause an undesirable chemical change and conducts electrons may be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc. in a form of a metal powder or a metal fiber; a conductive polymer such as a polyphenylene derivative; or a mixture thereof.

Aluminum may be used as the current collector COL1, but the present disclosure is not limited thereto.

## Positive Electrode Active Material

The positive electrode active material in the positive electrode active material layer AML1 may include a compound (lithiated intercalation compound) that is capable of reversibly intercalating and deintercalating lithium. At least one of a composite oxide of lithium and a metal selected from cobalt, manganese, nickel, and combinations thereof may be used as the compound.

The composite oxide may be a lithium transition metal composite oxide. Specific examples of the composite oxide include lithium nickel-based oxide, lithium cobalt-based oxide, lithium manganese-based oxide, lithium iron phosphate-based compound, cobalt-free nickel-manganese-based oxide, or a combination thereof.

As examples, the following compounds represented by any one of the following chemical formulas may be used: $Li_aA_{1-b}X_bO_{2-c}D_c$ ($0.90 \le a \le 1.8$, $0 \le b \le 0.5$, and $0 \le c \le 0.05$); $Li_aMn_{2-b}X_bO_{4-c}D_c$ ($0.90 \le a \le 1.8$, $0 \le b \le 0.5$, and $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_{1-b-c}Mn_8X_cO_{2-\alpha}D_\alpha$ ($0.90 \le a \le 1.8$, $0 \le b \le 0.5$, $0 \le c \le 0.5$, and $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, and $0 \le e \le 0.1$); $Li_aNiG_bO_2$ ($0.90 \le a \le 1.8$ and $0.001 \le b \le 0.1$); $Li_aCoG_bO_2$ ($0.90 \le a \le 1.8$ and $0.001 \le b \le 0.1$);$Li_aMn_{1-b}G_bO_2$ ($0.90 \le a \le 1.8$ and $0.001 \le b \le 0.1$);$Li_aMn_2G_bO_4$ ($0.90 \le a \le 1.8$ and $0.001 \le b \le 0.1$); $Li_aMn_{1-g}G_gPO_4$ ($0.90 \le a \le 1.8$ and $0 \le g \le 0.5$); $Li_{(3-f)}Fe_2(PO_4)_3$ ($0 \le f \le 2$); $Li_aFePO_4$ ($0.90 \le a \le 1.8$). In these chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having an amount of nickel greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, based on 100 mol% of the metal in the lithium transition metal composite oxide excluding lithium. The high-nickel-based positive electrode active material may be capable of provided high capacity and may be used in a high-capacity, high-density rechargeable lithium battery.

## Negative Electrode 20

The negative electrode 20 for a rechargeable lithium battery includes a current collector COL2 and a negative electrode active material layer AML2 on the current collector COL2. The negative electrode active material layer AML2 may include a negative electrode active material and may further include a binder and/or a conductive material.

In some examples, the negative electrode active material layer AML2 may include ≥ 90 wt% to ≤ 99.5 wt% of the negative electrode active material, ≥ 0.5 wt% to ≤ 5 wt% of the binder, and ≥ 0 wt% to ≤ 5 wt% of the conductive material.

The binder may serve to attach the negative electrode active material particles to each other and also to attach the

negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymeric material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to provide conductivity to the electrode. Any material that does not cause an undesirable chemical change and conducts electrons may be used in the battery. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc., in a form of a metal powder or a metal fiber; a conductive polymer such as a polyphenylene derivative; or a mixture thereof.

The negative current collector COL2 may include a copper foil, a nickel foil, a stainless-steel foil, a titanium foil, a nickel foam, a copper foam, a polymer substrate coated with a conductive metal, or a combination thereof.

## Negative Electrode Active Material

The negative electrode active material in the negative electrode active material layer AML2 may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx ($0 < x \leq 2$), a Si-Q alloy, or a combination thereof. In the formula Si-Q, Q is selected from an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may be in a form of silicon particles and amorphous carbon applied to the surfaces of the silicon particles. For example, the silicon-carbon composite may include secondary particles (core) in which primary silicon particles are assembled, and amorphous carbon coating layers (shell) on the surfaces of the secondary particles. The amorphous carbon may also be between the primary silicon particles. For example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

## Separator 30

Depending on the type of the rechargeable lithium battery, the separator 30 may be present between the positive

electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON®, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof. But the present disclosure is not limited to these examples.

The organic material and the inorganic material may be mixed in one coating layer. In other embodiments, a coating layer including an organic material and a coating layer including an inorganic material may be stacked.

## Electrolyte Solution ELL

The electrolyte solution ELL for a rechargeable lithium battery includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like, and the aprotic solvent may include nitriles such as R-CN (wherein R is a C2 to C20 linear, branched, or cyclic hydrocarbon group, and may include a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

When using a carbonate-based solvent, a cyclic carbonate and a chain carbonate may be mixed and used. The cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include one or two or more selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, lithium bis(fluorosulfonyl)imide ($Li(FSO_2)_2N$, LiFSI), $LiC_4F_9SO_3$, $LiN(C_xF_{2x+1}SO_2)(C_yF_{2y+1}SO_2)$ (where, x and y are integers of 1 to 20), lithium trifluoromethane sulfonate, lithium tetrafluoroethanesulfonate, lithium difluoro (oxalato)borate (LiDFOB), lithium difluorobis(oxalato)phosphate (LiDFBOP), and lithium bis(oxalato) borate (LiBOB).

## Rechargeable Lithium Battery

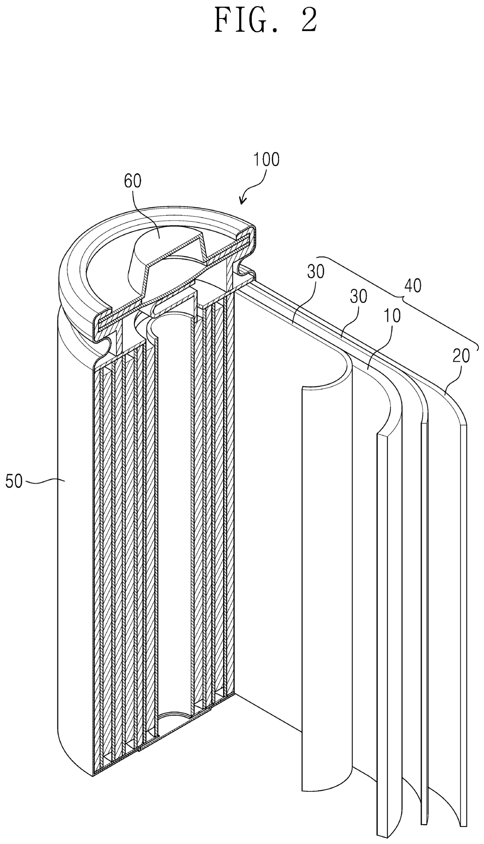

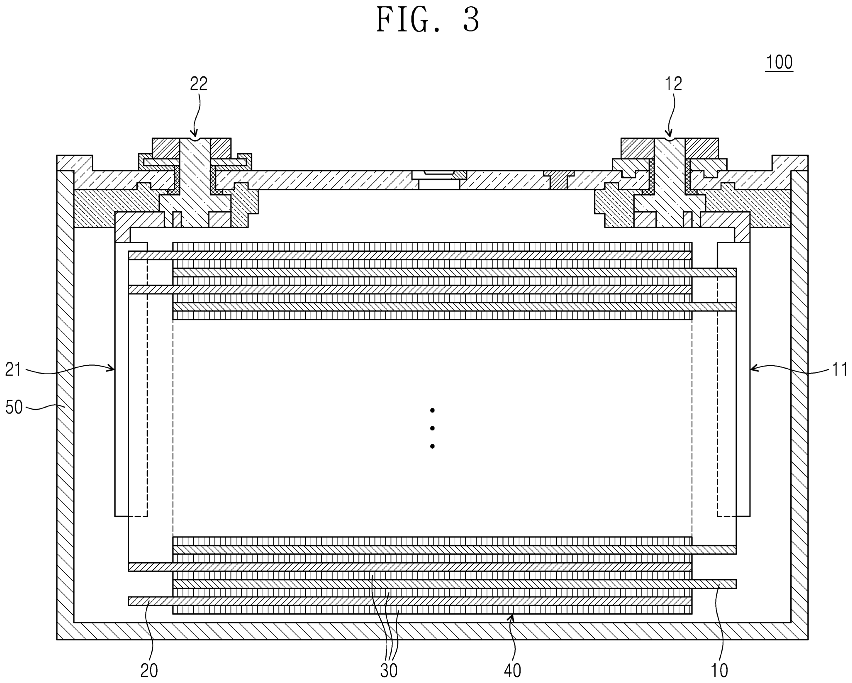

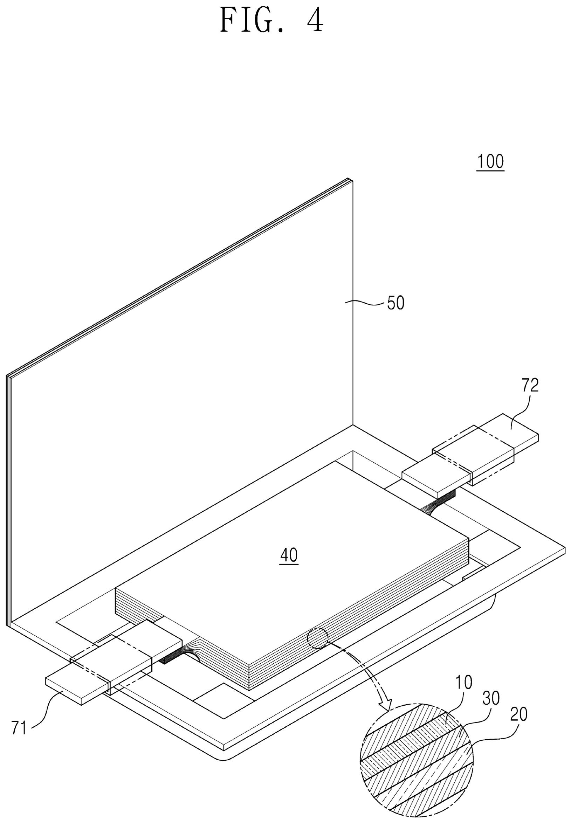

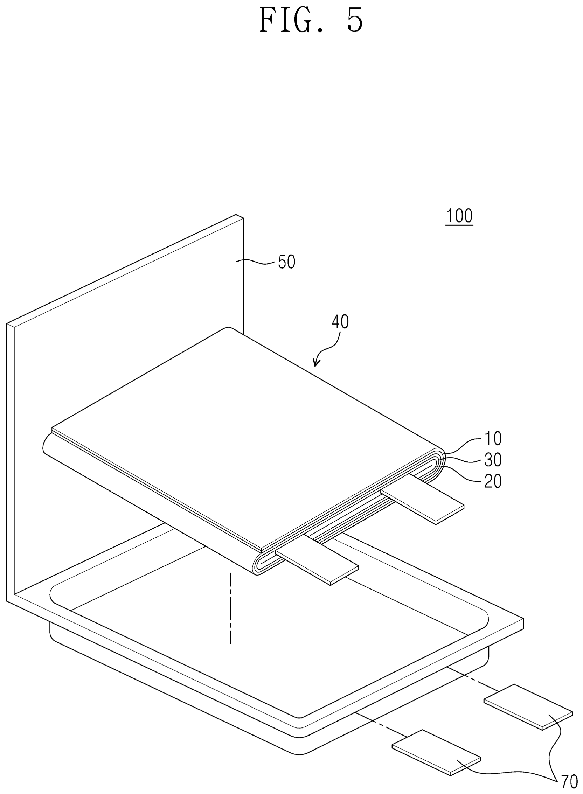

Rechargeable lithium batteries may be cylindrical, prismatic, pouch, coin-type batteries, and the like depending on their shape. FIGS. 2 to 5 are schematic views illustrating rechargeable lithium batteries according to an embodiments. FIG. 2 shows a cylindrical battery, FIG. 3 shows a prismatic battery, and FIGS. 4 and 5 show pouch-type batteries. Referring to FIGS. 2 to 4, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte solution (not shown). As shown in FIG. 2, the rechargeable lithium battery 100 may include a sealing member 60 sealing the case 50. As shown in FIG. 3, the rechargeable lithium battery 100 may also include a positive electrode lead tab 11, a positive electrode terminal 12, a negative electrode lead tab 21, and a negative electrode terminal 22. As shown in FIGS. 4

and 5, the rechargeable lithium battery 100 may include an electrode tab 70, which may be, for example, a positive electrode tab 71 and a negative electrode tab 72. The electrical tabs form an electrical path for inducing the current formed in the electrode assembly 40 to outside of the battery.

The rechargeable lithium battery according to an embodiment of the present disclosure may be used in automobiles, mobile phones, and/or various types of electric devices. But the present disclosure is not limited to such examples.

Hereinafter, the negative electrode 20 according to embodiments of the present disclosure will be described in detail.

## Negative electrode 20

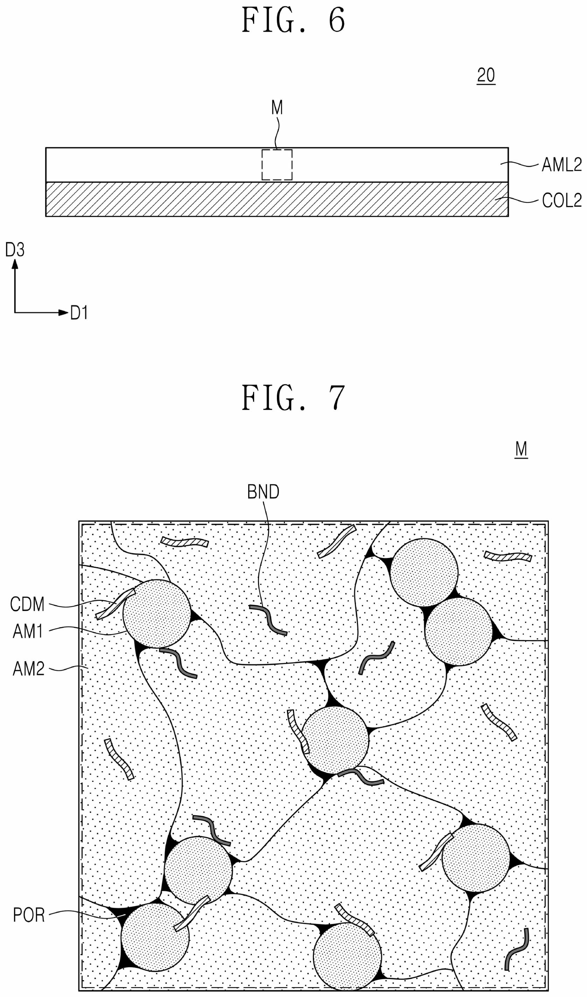

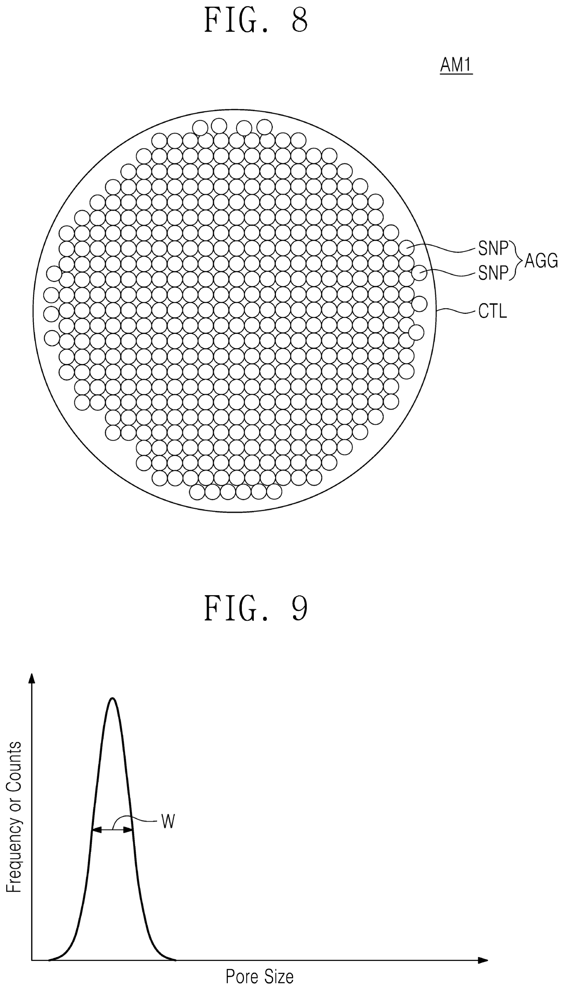

FIG. 6 is a cross-sectional view of the negative electrode 20 according to embodiments of the present disclosure. FIG. 7 illustrates the negative electrode active material layer AML2 according to embodiments of the present disclosure, and is an enlarged view of region M in FIG. 6. FIG. 8 is a cross-sectional view for illustrating the first negative electrode active material AM1 according to an embodiment of the present disclosure. FIG. 9 illustrates the distribution of pores POR in the negative electrode 20 according to an embodiment of the present disclosure.

Referring to FIGS. 6 and 7, the negative electrode 20 according to embodiments of the present disclosure may include a current collector COL2 and a negative electrode active material layer AML2 positioned on the current collector COL2. The current collector COL2 is as described above with reference to FIG. 1.

The mixture density of the negative electrode active material layer AML2 may be more than about 1.6 g/cc and not more than about 1.7 g/cc. For example, the mixture density of the negative electrode active material layer AML2 according to the present disclosure may be about 1.61 g/cc or more, about 1.62 g/cc or more, or about 1.64 g/cc or more, and may be about 1.7 g/cc or less, about 1.68 g/cc or less, or about 1.66 g/cc or less.

The negative electrode active material layer AML2 includes the first negative electrode active material AM1 and the second negative electrode active material AM2, and may further include a binder BND and/or a conductive material CDM.

The negative electrode active material layer AML2 may include ≥ 0.5 wt% to ≤ 5 wt% of the binder BND. For example, the negative electrode active material layer AML2 may include about 0.5 wt% or more, or about 1 wt% or more of the binder BND. In further embodiments, the negative electrode active material layer AML2 may include about 5 wt% or less, about 4 wt% or less, or about 3 wt% or less of the binder BND.

The types of binder BND is as described above. For example, the binder BND may include styrene-butadiene rubber and carboxymethyl cellulose.

The negative electrode active material layer AML2 may include ≥ 0 wt% to ≤ 5 wt% of the conductive material CDM. For example, the negative electrode active material layer AML2 may include about 0.05 wt% or more, about 0.1 wt% or more, or about 0.5 wt% or more of the conductive material CDM. In other embodiments, the negative electrode active material layer AML2 may include about 5 wt% or less, about 4 wt% or less, about 3 wt% or less, about 2 wt% or less, or about 1 wt% or less of the conductive material CDM.

The types of conductive material CDM are as described above. In some examples, the conductive material CDM may include carbon nanotubes, and the carbon nanotubes may include single-wall carbon nanotubes (SWCNT), multi-wall carbon nanotubes (MWCNT), and the like.

The carbon-based materials constituting the conductive material CDM may have a one-dimensional nanostructure. The one-dimensional nanostructure may be defined as, for example, a structure in which one dimension among three dimensions is larger than the other two dimensions. For example, the length of the carbon-based material constituting the conductive material CDM may be ≥ 0.5 μm to ≤ 100 μm. In other examples, the length of the carbon-based material may be ≥ 1 μm to ≤ 100 μm, ≥ 1 μm to ≤ 50 μm, ≥ 1 μm to ≤ 20 μm, or ≥ 5 μm to ≤ 20 μm.

The aspect ratio may be calculated as the ratio of the length of the carbon-based material to the diameter of the carbon-based material. In some examples, the aspect ratio of the carbon-based material constituting the conductive material CDM may be ≥ 10 to ≤ 3000. For example, the aspect ratio of the carbon-based material may be ≥ 10 to ≤ 2600, ≥ 20 to ≤ 2500, or ≥ 30 to ≤ 2400.

The conductive material CDM having a one-dimensional nanostructure may make line contact or surface contact. As will be described later, the first negative electrode active material AM1 having a relatively high sphericity may have a small inter-particle contact area. By including the conductive material CDM having a one-dimensional nanostructure, a conductive path between particles of the first negative electrode active material AM1 and a conductive path between the first negative electrode active material AM1 and the second negative electrode active material AM2 may be secured.

The structure and length of the carbon-based material constituting the conductive material CDM may be confirmed through scanning electron microscopy (SEM), transmission electron microscopy (TEM), atomic force microscopy (AFM), and the like.

The carbon-based material constituting the conductive material CDM may be identified through Raman spectroscopy. For example, a radial breathing mode (RBM) peak appearing in the range of 70 $cm^{-1}$ to 300 $cm^{-1}$ may appear in the Raman spectrum of the conductive material CDM. For example, $G^-$ band and $G^+$ band may appear in the Raman spectrum of the conductive material CDM.

As an alternative, the carbon-based material constituting the conductive material CDM may be identified through X-ray photoelectron spectroscopy (XPS). For example, in the XPS spectrum of the conductive material CDM, a relatively complex C 1s peak may be observed.

The negative electrode active material layer AML2 may include ≥ 90 wt% to ≤ 99 wt% of the first negative electrode active material AM1 and the second negative electrode active material AM2. For example, the negative electrode active material layer AML2 may comprise about 95 wt% or more, or about 96 wt% or more of the first negative electrode active material AM1 and the second negative electrode active material AM2. For example, the negative electrode active material layer AML2 may comprise about 99 wt% or less, about 98 wt% or less, or about 97 wt% or less of the first negative electrode active material AM1 and the second negative electrode active material AM2.

When the total amount of the first negative electrode active material AM1 and the second negative electrode active material AM2 satisfies the above-described range, the density of the negative electrode active material layer AML2 may be increased. As such, the resistance and expansion rate of the negative electrode 20 during charging and discharging may be reduced, and a rechargeable lithium battery having excellent capacity, efficiency, and long lifetime may be provided.

The weight ratio of the first negative electrode active material AM1 to the second negative electrode active material AM2 may be about 1:99 to about 30:70. For example, the weight ratio of the first negative electrode active material AM1 to the second negative electrode active material AM2 may be about 1:99 to about 20:80, about 5:95 to about 15:85, or about 7:93 to about 13:87. When the weight ratio of the first negative electrode active material AM1 and the second negative electrode active material AM2 satisfies these ranges, the density of the negative electrode active material layer AML2 may be increased. The resistance and expansion rate of the negative electrode 20 during charging and discharging may thereby be reduced, and a rechargeable lithium battery having excellent capacity, efficiency, and long lifetime may be provided.

The amount of the first negative electrode active material AM1 in the negative electrode active material layer AML2 may be ≥ 1 wt% to ≤ 30 wt% based on the total weight of the negative electrode active material layer AML2. For example, the amount of the first negative electrode active material AM1 may be ≥ 1 wt% to ≤ 20 wt%, ≥ 5 wt% to ≤ 15 wt%, or ≥ 7 wt% to ≤ 13 wt% based on the total weight of the negative electrode active material layer AML2. When the amount of the first negative electrode active material AM1 is in these ranges, the density of the negative electrode active material layer AML2 may be increased. The resistance and expansion rate of the negative electrode 20 during charging and discharging may thereby be reduced, and a rechargeable lithium battery having excellent capacity, efficiency and long lifetime may be provided.

The amount of the second negative electrode active material AM2 in the negative electrode active material layer AML2 may be the remaining amount after excluding the amounts of the first negative electrode active material AM1, binder BND, and conductive material CDM from the total weight of the negative electrode active material layer AML2.

During the negative electrode 20 fabrication, pores POR may be formed in the negative electrode active material layer AML2. Specifically, in the process of coating, drying, and rolling a negative electrode slurry containing the first negative electrode active material AM1, the second negative electrode active material AM2, binder BND, and conductive material CDM on the current collector COL2, pores POR may be formed in the negative electrode active material layer AML2. The pores POR may be formed between the constituent materials. The pores POR may be spaces between the materials constituting the negative electrode active material layer AML2.

In some examples, the pores POR may be formed mainly between the first negative electrode active material AM1 and the second negative electrode active material AM2, between different first negative electrode active materials AM1, and between different second negative electrode active materials AM2. In other words, the pores POR may be spaces formed between the first negative electrode active material AM1 and the second negative electrode active material AM2, between different first negative electrode active materials AM1, or between different second negative electrode active materials AM2.

Referring to FIG. 8, the first negative electrode active material AM1 may be in a form of particles that have spherical or near-spherical shapes. The negative electrode active material layer AML2 includes the spherical first negative electrode active material AM1, which has high mobility, facilitates inter-particle rearrangement, and enables easy formation of a regular arrangement structure, thereby allowing efficient utilization of space within the negative electrode active material layer AML2. As a result, the pores POR within the negative electrode active material layer AML2 may be small and uniform, and the density of the negative electrode active material layer AML2 may be relatively high.

The sphericity (S) of the particles of the first negative electrode active material AM1 may be expressed by Equation 1:

[Equation 1]

$$\text{Sphericity (S)} = (4\pi \times A)/P^2$$

In Equation 1, A is the cross-sectional area of a particles of the first negative electrode active material AM1, and P is the length perimeter of the cross-section of the first negative electrode active material AM1 particle.

A and P may be derived by obtaining a scanning electron microscope (SEM) image of a cross-section of the negative electrode 20 or the first negative electrode active material AM1 and then analyzing a cross-section of any first negative electrode active material AM1 identified from the image using a program such as Image J. For example, the sphericity may be a value obtained when a three-dimensional particle is projected onto a two-dimensional plane.

A and P may be the cross-sectional area and perimeter obtained when the cross-sectional shape of the first negative electrode active material AM1 particle is completely spherical. A and P may also be the cross-sectional area and perimeter obtained along irregular regions even if such regions exist in the cross-section of the first negative electrode active material AM1.

The sphericity according to Equation 1 may have a value of $\geq 0$ to $\leq 1$. The closer the sphericity according to Equation 1 is to about 1, the more circular the cross-section of the first negative electrode active material AM1 may be. on the other hand, the closer the sphericity according to Equation 1 is to about 0, the more non-spherical (or irregular) the first negative electrode active material AM1 may be.

The particles of the first negative electrode active material AM1 may have a sphericity (S) according to Equation 1 of $\geq 0.9$ to $\leq 1.0$. For example, the first negative electrode active material AM1 may have a sphericity (S) of $\geq 0.92$ to $\leq 0.98$, or $\geq 0.92$ to $\leq 0.95$. When the sphericity (S) is in these ranges, the first negative electrode active material AM1 may have a spherical or near-spherical shape.

With a structure as described herein, the first negative electrode active material AM1 may efficiently utilize space within the negative electrode active material layer AML2. The first negative electrode active material AM1 may have excellent tap density and may increase packing density during formation of the negative electrode 20. The first negative electrode active material AM1 may form uniform pores POR within the negative electrode active material layer AML2. The negative electrode active material layer AML2 having high density may improve adhesive strength and provide a negative electrode 20 with low resistance. As such, the negative electrode 20 exhibits a low expansion rate during charging and discharging, enabling the provision of a rechargeable lithium battery with excellent lifetime characteristics.

When the spherical first negative electrode active material AM1 is used in combination with a second negative electrode active material AM2 (as described below), the first negative electrode active material AM1 may be better inserted into the second negative electrode active material AM2. That is, the first negative electrode active material AM1 may be uniformly dispersed throughout the negative electrode active material layer AML2 and may increase the density of the negative electrode active material layer AML2.

The first negative electrode active material AM1 may have a SPAN value of $\geq 1.1$ to $\leq 1.6$ according to Equation 2:

[Equation 2]

$$\text{SPAN} = (D90-D10)/D50$$

In Equation 2, D10 is a particle diameter of the first negative electrode active material AM1 at which the cumulative volume reaches 10 vol% in the particle size distribution, D50 is a particle diameter of the first negative electrode active material AM1 at which the cumulative volume reaches 50 vol% in the particle size distribution, and D90 may be a particle diameter of the first negative electrode active material AM1 at which the cumulative volume reaches 90 vol% in the particle size distribution. D10, D50, and D90 may be obtained using a particle size analyzer.

In some examples, the first negative electrode active material AM1 may have a SPAN value according to Equation 2 of $\geq 1.1$ to $\leq 1.55$, or $\geq 1.1$ to $\leq 1.5$. When the SPAN value of the first negative electrode active material AM1 according to Equation 2 is in these ranges, the first negative electrode active material AM1 may not contain fine particles. The fine particles may have a size of about 1 $\mu$m or less and may typically be amorphous. Accordingly, the first negative electrode active material AM1 may have a relatively low specific surface area. Furthermore, the first negative electrode active material AM1 may reduce side reactions with the electrolyte, thereby enabling the realization of a rechargeable lithium battery with excellent lifetime characteristics.

The BET (Brunauer, Emmett, and Teller) specific surface area of the first negative electrode active material AM1 may be about 3 $m^2/g$ or less. For example, the BET specific surface area of the first negative electrode active material AM1

may be ≥ 0.5 $m^2/g$ to ≤ 2 $m^2/g$, ≥ 0.8 $m^2/g$ to ≤ 2 $m^2/g$, or ≥ 0.8 $m^2/g$ to ≤ 1.5 $m^2/g$.

The first negative electrode active material AM1 particles may include an agglomerate AGG and a coating layer CTL.

The aggregate AGG may include a plurality of silicon nanoparticles SNP. That is, the aggregate AGG may be formed by aggregation of a plurality of silicon nanoparticles. In other words, one aggregate AGG may include a plurality of silicon nanoparticles aggregated together. In some embodiments, the aggregate AGG may be formed by aggregation of two or more silicon nanoparticles. The aggregate AGG may have a spherical or elliptical shape.

The average particle diameter of the silicon nanoparticles SNP may be, for example, ≥ 10 nm to ≤ 1,000 nm. In other examples, the average particle diameter of the silicon nanoparticles SNP may be ≥ 10 nm to ≤ 200 nm, or ≥ 20 nm to ≤ 150 nm. When the average particle diameter of the silicon nanoparticles SNP is in these ranges, excessive volume expansion during charging and discharging may be suppressed, and disconnection of the conductive path due to particle fracture during charging and discharging may be prevented.

The amount of silicon nanoparticles SNP may be ≥ 55 wt% to ≤ 64 wt% based on the total weight of the first negative electrode active material AM1. For example, the amount of silicon nanoparticles SNP may be ≥ 58 wt% to ≤ 62 wt% based on the total weight of the first negative electrode active material AM1. When the amount of silicon nanoparticles SNP is in these ranges, a rechargeable lithium battery having excellent capacity, efficiency and lifetime characteristics may be provided.

The coating layer CTL may surround the aggregate AGG. The coating layer CTL may surround the plurality of silicon nanoparticles SNP. The coating layer CTL may include amorphous carbon. The amorphous carbon may include at least one of non-graphitizable carbons (hard carbon), graphitizable carbons (soft carbon), mesophase pitch carbonization product, and calcined coke. The amorphous carbon may have excellent hardness.

The thickness of the coating layer CTL may be ≥ 1 nm to ≤ 2 μm. For example, the thickness of the coating layer CTL may be ≥ 1 nm to ≤ 500 nm, ≥ 10 nm to ≤ 300 nm, or ≥ 20 nm to ≤ 200 nm. When the thickness of the coating layer CTL is in these ranges, volume expansion of silicon during charging and discharging may be suppressed.

The coating layer CTL within the first negative electrode active material AM1 may be distinguished through component analysis, Raman analysis, X-ray diffraction, electron microscopy, and the like of the first negative electrode active material AM1. For example, the coating layer CTL may have a D band (peak position: around 1350±50 $cm^{-1}$) and a G band (peak position: around 1580±50 $cm^{-1}$) in a Raman spectrum obtained by Raman spectroscopy. Herein, the D/G ratio may be defined as a ratio of a maximum peak intensity of the D band to a maximum peak intensity of the G band. In some examples, the D/G ratio of the coating layer CTL may be about 1.0 or greater. As another example, the coating layer CTL may exhibit blurred or broad diffraction peaks as a result of X-ray diffraction XRD analysis. As yet another example, the coating layer CTL may exhibit a halo pattern as a result of X-ray diffraction XRD analysis. When analyzing the microstructure of the coating layer CTL using scanning electron microscopy (SEM), regularly arranged crystals may not be substantially observed. When analyzing the coating layer CTL using transmission electron microscopy (TEM), the diffraction pattern may appear blurred or dispersed in multiple directions.

The first negative electrode active material AM1 according to one embodiment of the present disclosure may further include a polymer layer on the coating layer CTL. When the first negative electrode active material AM1 includes the polymer layer, volume expansion of the first negative electrode active material AM1 during charging and discharging may be effectively suppressed. When the first negative electrode active material AM1 further includes the polymer layer, the electrolyte may be prevented from penetrating into the interior of the first negative electrode active material AM1 during charging and discharging. As a result, side reactions between the first negative electrode active material AM1 and the electrolyte may be more effectively suppressed.

The polymer layer may include a copolymer of polyvinyl alcohol and polyacrylic acid. For example, the copolymer may comprise a crosslinked polymer of polyvinyl alcohol and polyacrylic acid. When the polymer layer includes a crosslinked polymer of polyvinyl alcohol and polyacrylic acid, the polymer layer may be maintained without being dissolved in the solvent (e.g., water, etc.) that is used in forming the negative electrode active material layer AML2.

When the first negative electrode active material AM1 further includes a polymer layer, the amount of the polymer layer may be ≥ 0.01 parts by weight to ≤ 3 parts by weight based on 100 parts by weight of the first negative electrode active material AM1. For example, the amount of the polymer layer may be ≥ 1.2 parts by weight to ≤ 2.1 parts by weight based on 100 parts by weight of the first negative electrode active material AM1. When the amount of the polymer layer is in these ranges, the above-mentioned effects due to the formation of the polymer layer may be obtained to a greater extent.

The amount of polyacrylic acid in the polymer layer may be greater than the amount of polyvinyl alcohol. For example, in the polymer layer, the mixing ratio of polyvinyl alcohol and polyacrylic acid may be about 3:97 to about 40:60, about 6:94 to about 40:60, or about 6:94 to about 20:80 by weight. When the mixing ratio of polyvinyl alcohol and polyacrylic acid is in these ranges, the lifetime of the rechargeable lithium battery may be further extended.

In the polymer layer, the molar ratio of the functional group (-OH) contained in the polyvinyl alcohol and the functional group (-COOH) contained in the polyacrylic acid may be controlled. For example, the molar ratio of the functional group (-OH) contained in the polyvinyl alcohol and the functional group (-COOH) contained in the polyacrylic acid may be

about 5:95 to about 50:50, or about 10:90 to about 30:70. When the molar ratio of the functional group (-OH) contained in the polyvinyl alcohol and the functional group (-COOH) contained in the polyacrylic acid is in these ranges, the above-mentioned effects due to the formation of the polymer layer may be obtained to a greater extent, and the lifespan of the rechargeable lithium battery may be further extended.

The first negative electrode active material AM1 may include pores. Pores may be classified into micropores, mesopores, and macropores according to their size. Micropores may have a pore size greater than about 0 nm and less than about 2 nm. Mesopores may have a pore size of ≥ 2 nm to ≤ 50 nm. Macropores may have a pore size greater than about 50 nm. The pore size may refer to the average diameter of the pores or the length of the longest axis.

The first negative electrode active material AM1 may include mesopores. The ratio of the mesopore volume to the total pore volume of the first negative electrode active material AM1 may be about 30% or more and less than about 70%. In some examples, the ratio of the mesopore volume to the total pore volume of the first negative electrode active material AM1 may be ≥ 30% to ≤ 68%. Here, the ratio of mesopore volume may be expressed as (mesopore volume/total pore volume) × 100. The mesopore volume and total pore volume may be quantitatively measured using BJH (Barrett-Joyner-Halenda) analysis equipment.

The total pore volume may be the total volume of pores formed within the first negative electrode active material AM1, including the mesopore volume. In some examples, the total pore volume may be ≥ 0.001 $cm^3/g$ to ≤ 0.01 $cm^3/g$, or ≥ 0.005 $cm^3/g$ to ≤ 0.05 $cm^3/g$.

The first negative electrode active material AM1 may substantially not include macropores. As noted above, the macropores may have a size of ≥ 50 nm to ≤ 500 nm. The ratio of the macropore volume to the total pore volume of the first negative electrode active material AM1 may be about 1% or less.

The first negative electrode active material AM1 may also include micropores. here, the micropores may be the volume excluding the mesopore volume and the macropore volume from the total pore volume of the first negative electrode active material AM1.

Referring again to FIG. 7, the second negative electrode active material AM2 included in the negative electrode active material layer AML2 may include crystalline carbon. The crystalline carbon may have high capacity and may include at least one of natural graphite and artificial graphite.

Natural graphite may have a relatively large charge-discharge capacity. Natural graphite also has relatively low mechanical strength and may be readily compressed during rolling of the negative electrode active material layer AML2. This allows the density of the negative electrode active material layer AML2 to be increased.

Artificial graphite may have relatively high orientation (highly oriented) and uniform structure. Artificial graphite may prove more pathways for lithium-ion transport than natural graphite. Artificial graphite may have relatively high charge-discharge efficiency, excellent rapid charging characteristics, and long lifetime.

The form of natural graphite or artificial graphite may be amorphous, plate-shaped, flake, spherical, fibrous, or combinations thereof, and any form is acceptable. For example, natural graphite may have an elliptical form, and artificial graphite may have an angular form.

The second negative electrode active material AM2 may be identified through structural analysis, compositional analysis, Raman analysis, X-ray diffraction, electron microscopy, and the like. For example, the second negative electrode active material AM2 may have a D/G ratio of about 1.0 or less in the Raman spectrum obtained by Raman spectroscopy. As another example, the second negative electrode active material AM2 may exhibit relatively high and distinct diffraction peaks at specific angles as determined by X-ray diffraction (XRD) analysis. The X-ray diffraction (XRD) analysis results may show that artificial graphite has larger diffraction peaks at specific angles than natural graphite or that the artificial graphite has diffraction peaks with narrower full width at half maximum. For example, the maximum peak intensity ratio (I(002)/I(110)) of the (002) and (110) planes may be greater for artificial graphite than for natural graphite. In another example, when the microstructure of the second negative electrode active material AM2 is analyzed using a scanning electron microscope (SEM), crystals regularly arranged in a specific direction may be observed. When the second negative electrode active material AM2 is analyzed using a transmission electron microscope (TEM), the lattice spacing of the crystals may be confirmed, and a specific diffraction pattern may be observed.

The second negative electrode active material AM2 is crystalline carbon and the second negative electrode active material AM2 may include both natural graphite and artificial graphite. The weight ratio of natural graphite and artificial graphite may be about 5:95 to about 95:5. For example, the weight ratio of natural graphite and artificial graphite may be about 10:90 to about 90:10, about 20:80 to about 80:20, about 30:70 to about 70:30.

Referring to FIG. 9, the negative electrode active material layer AML2 according to an embodiment of the present disclosure may include a plurality of pores, and the pores POR within the negative electrode active material layer AML2 may be uniform.

The standard deviation of the size of the pores POR within the negative electrode active material layer AML2 may be relatively small. For example, the standard deviation of the size of the pores POR within the negative electrode active material layer AML2 according to an embodiment of the present disclosure may be within about 10% of the average size.

The plurality of pores may be represented as a graph of frequency (or number) according to pore size. In such a

graph, the size distribution of the pores POR within the negative electrode active material layer AML2 according to embodiments of the present disclosure may have a single peak. In particular, the size distribution of the pores POR may have a relatively narrow and distinct peak. That is, in the size distribution of the pores POR, the width W of the peak may be relatively narrow, and the width W of the peak may be the full width at half maximum (FWHM). here, the width W of the peak may refer to the difference between two independent variable values at which the peak intensity (frequency or counts) reaches half of its maximum value.

The standard deviation of the size of the pores POR may be obtained by obtaining a scanning electron microscopy (SEM) image of a cross-section of the negative electrode active material layer AML2, analyzing the area of the pores POR from the SEM image with a program such as Image J, and then calculating the average value and standard deviation of the obtained data by using the diameter of a circle having the same area as each pore POR, and the standard deviation of the size of the pores POR may be expressed as a ratio (%) relative to the average value. As another example, the standard deviation of the pore POR size may be calculated using the BJH (Barrett-Joyner-Halenda) method based on data obtained from BET analysis of the negative electrode active material layer AML2.

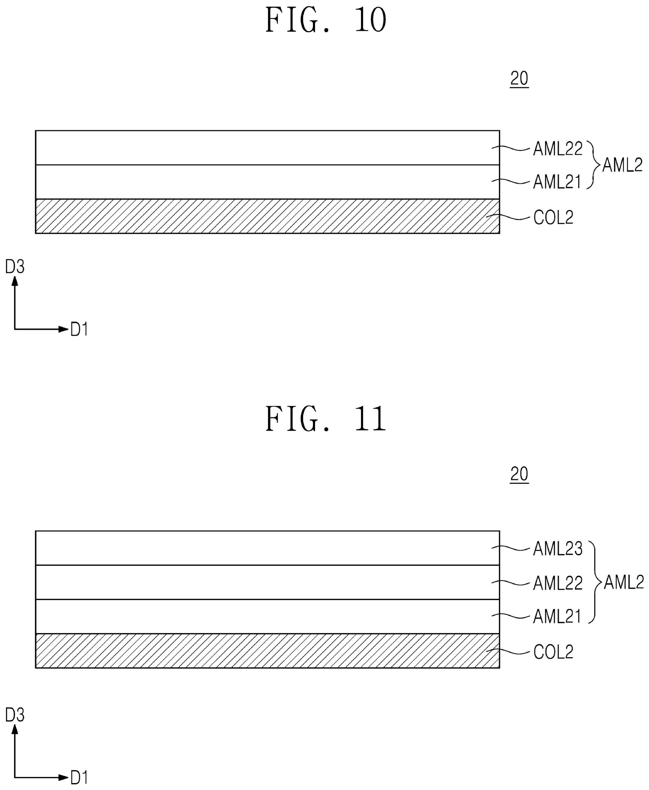

FIGS. 10 and 11 are cross-sectional views of negative electrodes 20 according to other embodiments of the present disclosure. The negative electrodes 20 according to FIGS. 10 and 11 may be a double-layered or triple-layered negative electrode that are thicker than the negative electrode 20 according to FIG. 6.

Referring to FIG. 10, the negative electrode 20 according to an embodiment of the present disclosure may include a first negative electrode active material layer AML21 and a second negative electrode active material layer AML22. The first negative electrode active material (as described above) may be included in either the first negative electrode active material layer AML21 or the second negative electrode active material layer AML22.

Referring to FIG. 11, the negative electrode 20 according to another embodiment of the present disclosure may include a first negative electrode active material layer AML21, a second negative electrode active material layer AML22, and a third negative electrode active material layer AML23. The first negative electrode active material (as described above) may be included in either the first negative electrode active material layer AML21 or the second negative electrode active material layer AML22.

With the embodiments shown in FIGS. 10 and 11, the negative electrode 20 having high mixture density, excellent adhesive strength, low resistance, and low expansion rate may be implemented.

The negative electrode active material layer AML2 according to the embodiments of the present disclosure may have relatively uniform pores POR and may have a high density. Thus, the negative electrode 20 according to the embodiments of the present disclosure may have excellent adhesive strength and low resistance, and the expansion rate of the negative electrode 20 due to charging and discharging may be reduced. Further, the rechargeable lithium battery according to the embodiments of the present disclosure may have a long lifetime.

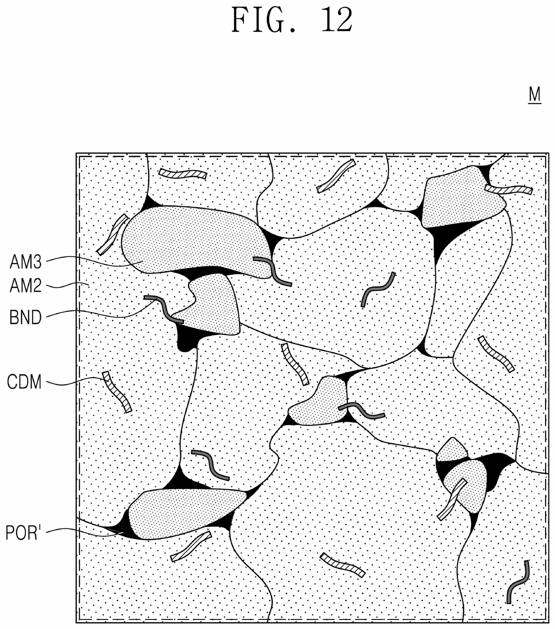

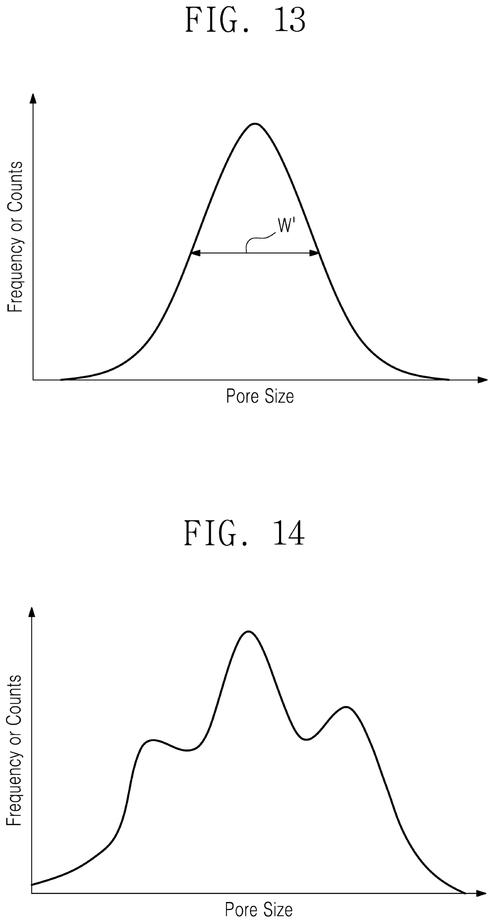

FIG. 12 illustrates a negative electrode active material layer according to a comparative example. FIGS. 13 and 14 are graphs showing the distribution of pores POR' within the negative electrode active material layer according to the comparative example.

Referring to FIG. 12, the comparative example includes an amorphous third negative electrode active material AM3 instead of the first negative electrode active material AM1 described above.

The sphericity of the third negative electrode active material AM3 (as calculated according to Equation 1 above) may be less than about 0.9.

The third negative electrode active material AM3 contains fine particles. The SPAN value of the third negative electrode active material AM3 (as calculated according to Equation 2 above) is outside the range of $\geq 1.1$ to $\leq 1.6$.

The third negative electrode active material AM3 has a relatively large specific surface area, i.e., a relatively large BET specific surface area. The BET specific surface area of the third negative electrode active material AM3 exceeds about 3 $m^2/g$.

The pores POR' within the negative electrode active material layer according to the comparative example are not uniform in size and may vary. More specifically, the standard deviation of the size of the pores POR' within the negative electrode active material layer according to a comparative example is relatively large. As shown in FIG. 13, the size distribution of the pores POR' within the negative electrode active material layer according to the comparative example have a relatively wide peak. The width of the peak W' may be relatively wide. Alternatively, referring to FIG. 14, the size distribution of the pores POR' within the negative electrode active material layer according to other comparative examples may have a plurality of peaks.

By including an amorphous third negative electrode active material AM3, the negative electrode active material layer according to the comparative example of the present disclosure may have a relatively low density. The negative electrode according to the comparative example may have relatively low adhesive strength and high resistance. As a result, during charging and discharging, the expansion rate of a negative electrode including the negative electrode active material AM3 according to the comparative example is high, and the lifetime of the rechargeable lithium battery including the negative electrode may be short.

Hereinafter, the present disclosure will be described in more detail through examples. However, the present

disclosure is not limited to these examples.

## Example 1

Silicon particles having an average particle diameter of about 8 μm were ball-milled to produce primary particles having an average diameter (D50) of about 100 nm. The primary particles were mixed with stearic acid in a weight ratio of about 20:80, and this mixture was spray-dried to produce secondary particles having an average diameter (D50) of about 7 μm and containing pores. The prepared secondary particles were mixed with petroleum pitch in a weight ratio of about 60:40, and this mixture was isostatically compressed under a pressure of ≥ 10 MPa to ≤ 200 MPa. The obtained compressed body was subsequently carbonized at a temperature of about 1,000 °C under $N_2$ atmosphere, and the carbonized product was subjected to a sieving process, through which the first negative electrode active material AM1 was obtained with a yield of more than about 90%.

The first negative electrode active material AM1 included of secondary particles with an average particle diameter (D50) of about 7 μm, which were assembled from primary silicon particles having an average particle diameter (D50) of about 100 nm. Soft carbon layers having a thickness of about 30 nm coated the secondary particles. The amount of silicon nanoparticles was about 60 wt% based on the total weight of the first negative electrode active material AM1, and the amount of the soft carbon was about 40 wt%.

Graphite (natural graphite and artificial graphite) was used as the second negative electrode active material AM2. A negative electrode active material layer slurry was prepared by mixing a total of about 96.5 wt% of negative electrode active materials (wherein the ratios of the first negative electrode active material to natural graphite to artificial graphite was 10:45: 45 by weight), about 0.5 wt% of conductive material (SWCNT), and about 3 wt% binder (CMC, SBR) in an aqueous solvent. The negative electrode active material layer slurry was coated on a Cu foil current collector, dried, and rolled to produce a negative electrode. The mixture density of the negative electrode was about 1.65 g/cc.

## Comparative Example

The negative electrode active material was prepared in the same manner as that of Example 1, except that uniaxial compression at about 400 MPa was performed instead of an isostatic compression process at ≥ 10 MPa to ≤ 200 MPa pressure on the prepared mixture of the secondary particles and petroleum pitch to obtain a third negative electrode active material.

The negative electrode was prepared in the same manner as that of Example 1, except that the negative electrode active material layer slurry was prepared by mixing the obtained third negative electrode active material instead of the first negative electrode active material, and rolling was performed at greater pressure than in Example 1 to make a negative electrode having a mixture density of about 1.65 g/cc after coating and drying the negative electrode active material layer slurry on the Cu foil current collector.

## Manufacture of rechargeable lithium battery

Rechargeable lithium half-cells were made by a conventional method using the negative electrodes of the Example and the Comparative Example. Each of the half cells included a separator made of polyethylene material with a thickness of about 14 μm, a lithium metal counter electrode, and an electrolyte. As the electrolyte, a mixed solvent (about 3:7 volume ratio) of ethylene carbonate and dimethyl carbonate in which 1M $LiPF_6$ was dissolved was used.

Rechargeable lithium full-cells were made by a conventional method using the negative electrodes of the Example and the Comparative Example. Each of the full cells included a separator made of polyethylene material with a thickness of about 14 μm, a positive electrode, and the electrolyte. The positive electrode was prepared by mixing about 96 wt% $LiNi_{0.88}Co_{0\cdot11}Al_{0.01}O_2$ positive electrode active material, about 2 wt% polyvinylidene fluoride binder, and about 2 wt% Ketjen black conductive material in N-methylpyrrolidone solvent to prepare a positive electrode active material layer slurry, and coating, drying, and rolling the positive electrode active material layer slurry on an Al foil current collector.

## Analysis of negative electrode active materials

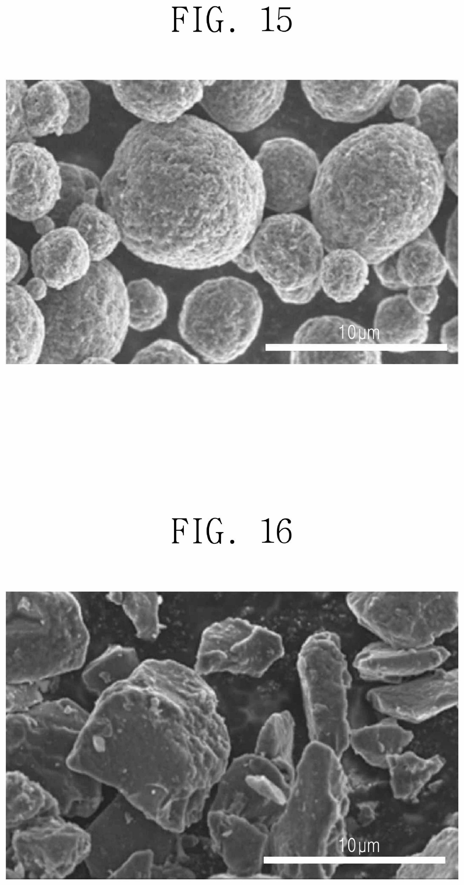

FIGS. 15 and 16 are scanning electron microscopy (SEM) images of the first negative electrode active material AM1 of Example 1 and the third negative electrode active material AM3 of the Comparative Example. From the scanning electron microscopy (SEM) images, the sphericities of the first negative electrode active material AM1 particles of Example 1 and the third negative electrode active material AM3 particles of the Comparative Example were determined according to Equation 1 above. Here, the A and P values were the cross-sectional area and length of the perimeter of the cross-section, respectively, obtained by projecting three-dimensional particles onto a two-dimensional plane, from the scanning electron microscopy (SEM) images of the particles of the first or third negative electrode active material AM1 or

AM3. The average value of the results for 30 randomly selected particles was calculated, and the results are shown in Table 1.

In addition, the SPAN values of the first negative electrode active material AM1 of Example 1 and the third negative electrode active material AM3 of the Comparative Example were obtained according to Equation 2 above. here, the SPAN values according to Equation 2 were obtained using the results of measuring the D10, D50, and D90 of the first or third negative electrode active material AM1 or AM3 with a particle analyzer (product name: LS 13 320, manufacturer: Beckman Coulter). The results are shown in Table 1.

Table 1

| Classification | Sphericity | Span value |
|---|---|---|
| Example 1 | 0.97 | 1.1 |
| Comparative Example | 0.85 | 1.8 |

Referring to FIGS. 15, 16, and Table 1, the particles of the first negative electrode active material AM1 of Example 1 was spherical or nearly spherical in shape, while the particles of the third negative electrode active material AM3 of the Comparative Example was irregular in shape. Thus, the first negative electrode active material AM1 according to Example 1 had a greater degree of sphericity than the third negative electrode active material AM3 according to the Comparative Example.

Referring to Table 1, it can also be seen that the first negative electrode active material AM1 according to Example 1 had a smaller span value than the third negative electrode active material AM3 according to the Comparative Example. Thus, the first negative electrode active material AM1 according to Example 1 contained few fine particles, which would thereby reduce electrolyte side reactions in a battery including the first negative electrode active material AM1.

## Evaluation of negative electrode and rechargeable lithium battery

### (1) Comparison of pressure during rolling of negative electrode

During the fabrication of negative electrode including the third negative electrode active material AM3 according to the Comparative Example, when the negative electrode active material layer slurry was coated onto the Cu foil current collector, dried, and then rolled under the same pressure, the mixture density of the negative electrode according to the Comparative Example was about 1.6 g/cc. That is, it was confirmed that in the negative electrode according to the Comparative Example, the relatively non-spherical third negative electrode active material tends to interlock with other third negative electrode active materials or with other components (for example, the second negative electrode active material) during the negative electrode fabrication. Thus, it is difficult to achieve dense packing without voids using the third negative electrode active material AM3 according to the Comparative Example. Therefore, a higher pressure would be required to obtain the same mixture density (about 1.65 g/cc) as that of the negative electrode according to Example 1.

(2) Uniformity of pores

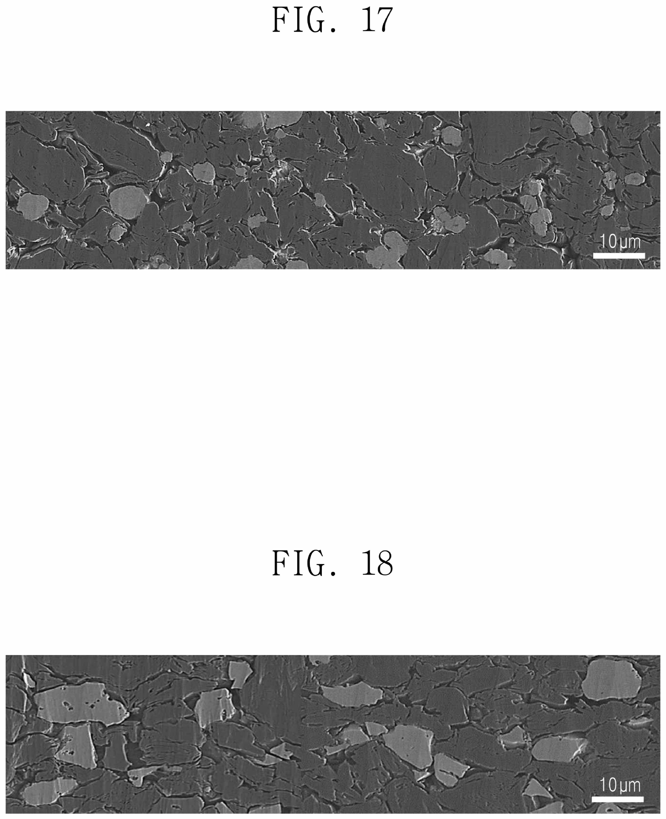

FIGS. 17 and 18 are scanning electron microscopy (SEM) images of cross-sections of the negative electrode 20 according to Example 1 and the Comparative Example, respectively. The standard deviation of pore POR size was determined by analyzing the area of pores POR from scanning electron microscopy (SEM) images of the cross-section of the negative electrode active material layer AML2 using Image J. The pore POR size was defined as the diameter of a circle having the same as each pore POR. The average value and standard deviation of the obtained data were calculated, and the ratio of the standard deviation to the average value (that is, standard deviation/average value×100) was used to express the results. The results are shown in Table 2. Note that "> 10" means that the standard deviation of pore size for the Comparative Example exceeded 10% of the average value.

Table 2

| Classification | Standard deviation of pore size (%) |
|---|---|
| Example 1 | 2 |
| Comparative Example | > 10 |

Referring to FIGS. 17, 18, and Table 2, the standard deviation of the pore size within the negative electrode active

material layer AML2 of the negative electrode 20 according to Example 1 was less than the standard deviation of the pore size within the negative electrode active material layer of the negative electrode according to the Comparative Example. Thus, it can be seen that the negative electrode active material layer AML2 of the negative electrode 20 according to Example 1 includes more uniformly formed pores.

### (3) Adhesive strength

The negative electrodes according to Example 1 and the Comparative Example were cut to a constant size (15 mm × 100 mm) and fixed to slide glass. Then the 180° peel strength of the negative electrode active material layer AML2 from the Cu foil was measured. The evaluation was conducted by measuring five peel strength values and determining the average value. The results are shown in Table 3 below.

As shown in Table 3, the negative electrode according to Example 1 had superior adhesive strength to the negative electrode current collector compared to the negative electrode according to the Comparative Example.

### (4) Electrode resistance

For half-cell rechargeable lithium batteries including Example 1 and the Comparative Example, resistance was measured at 25 °C using an impedance analyzer (Solartron 1260A Impedance/Gain-Phase Analyzer) according to a 2-probe method. An amplitude was ± 10 mV and a frequency range was 1 MHz to 0.1 Hz. The results are shown in Table 3.

Referring to Table 3, the negative electrode according to Example 1 had lower resistance than the negative electrode according to the Comparative Example.

### (5) Expansion rate of the negative electrode

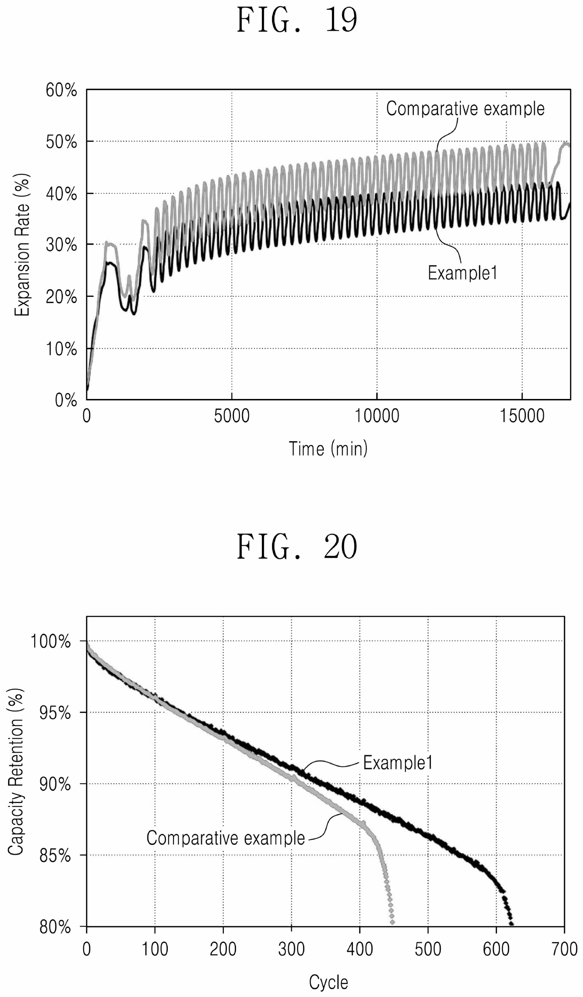

Full-cell rechargeable lithium batteries including Example 1 and the Comparative Example were charged at 25° C with a constant current of 0.1 C to a charge termination voltage of 4.2 V (CC-CV, cut-off 0.01 C), then discharged (CC) with a constant current of 0.1 C to a discharge termination voltage of 2.5 V to perform initial charge-discharge. Thereafter, a cycle of charging with a constant current of 1 C to a charge termination voltage of 4.2 V (CC-CV, cut-off 0.01 C) and then discharging (CC) with a constant current of 1 C to a discharge termination voltage of 2.5 V was repeated 50 times. After performing the initial charge, the batteries were disassembled to compare the thickness of the negative electrode before and after charging, and the initial expansion rate was calculated according to Equation 3 below. After repeating the charge cycle 50 times, the batteries were disassembled to measure the thickness of the negative electrode, and then the expansion rate after 50 cycles was calculated according to Equation 4 below. The results are shown in FIG. 19 and Table 3.

Initial expansion rate (%) = (thickness of negative electrode after initial charging - thickness of negative electrode before initial charging)/(thickness of negative electrode before initial charging) × 100 [Equation 3]

Expansion rate at 50 cycles (%) = (thickness of negative electrode after charging at 50 cycles - thickness of negative electrode before initial charging)/(thickness of negative electrode before initial charging) × 100 [Equation 4]

Referring to FIG. 19 and Table 3, the negative electrode according to Example 1 had a smaller expansion rate than the negative electrode according to the Comparative Example.

### (6) Lifetime evaluation

Full-cell rechargeable lithium batteries including Example 1 and the Comparative Example were charged at 25 °C with a constant current of 0.1C to a charge termination voltage of 4.2V (CC-CV, cut-off 0.01C), then discharged (CC) with a constant current of 0.1C to a discharge termination voltage of 2.5V to perform initial charge-discharge. Thereafter, a cycle of charging with a constant current of 1C to a charge termination voltage of 4.2V (CC-CV, cut-off 0.01C) and then discharging (CC) with a constant current of 1C to a discharge termination voltage of 2.5V was repeated. The number of cycles (n) at which the ratio of discharge capacity to initial discharge capacity reached 85% was obtained. The results are shown in FIG. 20 and Table 3.

Referring to FIG. 20 and Table 3, the rechargeable lithium battery made according to Example 1 had a longer lifetime than the rechargeable lithium battery made according to the Comparative Example.

Table 3

| | Adhesive strength (gf/mm) | Electrode resistance ($\Omega/cm^2$) | Initial expansion rate (%) | Expansion rate at 50 cycles (%) | Lifetime (number of cycles, n) |
|---|---|---|---|---|---|
| Example 1 | 1.5 | 15 | 26 | 40 | 600 |
| Comparative Example | 1.0 | 22 | 30 | 49 | 420 |

In conclusion, a negative electrode for rechargeable lithium batteries according to embodiments of the present disclosure includes a first negative electrode active material having a substantially spherical shape, thereby enabling more compact packing and uniform formation of pores within the negative electrode. Accordingly, the negative electrode may exhibit excellent adhesive strength to the negative electrode current collector and low resistance. Further, even after repeated charge-discharge cycles, the negative electrode exhibits low expansion. The negative electrode thereby enables implementation of rechargeable lithium batteries with excellent lifetime characteristics.

A negative electrode according to embodiments of the present disclosure may increase the uniformity of pores within the negative electrode active material layer through efficient space utilization within the negative electrode active material layer, and the negative electrode may increase the density of the negative electrode active material layer. As a result, the negative electrode may have excellent adhesive strength and low resistance, and the negative electrode may have a low expansion rate during charging and discharging.

A rechargeable lithium battery according to embodiments of the present disclosure may have excellent lifetime characteristics. And an electrical device including a rechargeable lithium battery according to embodiments of the present disclosure may have excellent reliability and stability.

While the present disclosure has been described with reference to preferred embodiments, it should be understood that these embodiments are provided for illustrative purposes only and do not limit the scope of the present disclosure. Various modifications and equivalent arrangements may be made without departing from the spirit and scope of the present disclosure.

## Claims

**1.** A negative electrode (20) comprising:

a negative electrode current collector (COL2); and
a negative electrode active material layer (AML2) on the negative electrode current collector (COL2),
wherein the negative electrode active material layer (AML2) comprises:

a first negative electrode active material (AM 1) in a form of particles each comprising silicon nanoparticles (SNP) aggregated together and an amorphous carbon coating layer (shell) surrounding the silicon nanoparticles (SNP), the particles of the first negative electrode active material (AM 1) have a sphericity (S) of $\geq 0.9$ to $\leq 1.0$ calculated as: Sphericity (S) = $(4\pi \times A)/P^2$, where A is a cross-sectional area of the first negative electrode active material (AM1) particles and P is a length of a perimeter of the first negative electrode active material (AM1) particles,
a second negative electrode active material (AM2) comprising crystalline carbon;
a binder (BND); and
a conductive material (CDM), and

wherein the negative electrode active material layer (AML2) has a mixture density of more than about 1.6 g/cc and not more than about 1.7 g/cc.

**2.** The negative electrode (20) of claim 1, wherein an amount of the first negative electrode active material (AM 1) is $\geq 1$ wt% to $\leq 30$ wt% based on the total weight of the negative electrode active material layer (AML2).

**3.** The negative electrode (20) of claim 1 or 2, wherein a weight ratio of the first negative electrode active material (AM 1) to the second negative electrode active material (AM2) is about 1:99 to about 30:70.

**4.** The negative electrode (20) according to any one of claims 1 to 3, wherein a particle size of the silicon nanoparticles (SNP) is $\geq 10$ nm to $\leq 1{,}000$ nm.

**5.** The negative electrode (20) according to any one of claims 1 to 4, wherein a thickness of the amorphous carbon coating layers (shell) is ≥ 1 nm to ≤ 2 μm.

**6.** The negative electrode (20) according to any one of claims 1 to 5, wherein the particles of the first negative electrode active material (AM 1) have a span value of ≥ 1.1 to ≤ 1.6 calculated as: Span = (D90-D10)/D50, wherein D10 is a particle diameter of the first negative electrode active material (AM 1) at which a cumulative volume reaches 10 vol% in the particle size distribution, D50 is a particle diameter of the first negative electrode active material (AM 1) at which the cumulative volume reaches 50 vol% in the particle size distribution, and D90 is a particle diameter of the first negative electrode active material (AM 1) at which the cumulative volume reaches 90 vol% in the particle size distribution.

**7.** The negative electrode (20) according to any one of claims 1 to 6, wherein the each of the particles of the first negative electrode active material (AM 1) further comprise a polymer layer on the amorphous carbon coating layer (shell).

**8.** The negative electrode (20) according to any one of claims 1 to 7, wherein the second negative electrode active material (AM2) comprises at least one of natural graphite and artificial graphite.

**9.** The negative electrode (20) according to any one of claims 1 to 8, wherein the second negative electrode active material (AM2) comprises natural graphite and artificial graphite, and
wherein a weight ratio of the natural graphite to the artificial graphite is about 5:95 to about 95:5.

**10.** The negative electrode (20) according to any one of claims 1 to 9, wherein pores (POR) are formed the negative electrode active material layer (AML2), and
wherein a standard deviation of a size of the pores (POR) is within about 10% of an average size of the pores (POR).

**11.** A rechargeable lithium battery (100) comprising:

the negative electrode (20) according to any one of claims 1 to 10;
a positive electrode (10); and
a separator (30) between the negative electrode (20) and the positive electrode (10).

**12.** The rechargeable lithium battery (100) of claim 11, wherein, in the negative electrode (20), an amount of the first negative electrode active material (AM 1) is ≥ 1 wt% to ≤ 30 wt% based on a total weight of the negative electrode active material layer (AML2).

**13.** The rechargeable lithium battery (100) of claim 11 or 12, wherein, in the negative electrode (20), a weight ratio of the first negative electrode active material (AM 1) to the second negative electrode active material (AM2) is about 1:99 to about 30:70.

**14.** The rechargeable lithium battery (100) according to any one of claims 11 to 13, wherein, in the negative electrode (20), a particle size of each of the silicon nanoparticles (SNP) is ≥ 10 nm to ≤ 1,000 nm.

**15.** The rechargeable lithium battery (100) according to any one of claims 11 to 14, wherein, in the negative electrode (20), a thickness of the amorphous carbon coating layers (shell) is ≥ 1 nm to ≤ 2 μm.

FIG. 1

ELL
Li+
COL1 AML1
10
30
COL2 AML2
20

FIG. 2

100
60
30
30
40
10
20
50

100
11
12
10
40
30
20
22
21
50

FIG. 3

# FIG. 4

100
50
72
40
71
10
30
20

# FIG. 5

100
50
40
10
30
20
70

FIG. 6
20
M
AML2
COL2
D3
D1
FIG. 7
M
BND
CDM
AM1
AM2
POR

FIG. 8

AM1
SNP
SNP
AGG
CTL

FIG. 9

Frequency or Counts
W
Pore Size

FIG. 10

20
AML22
AML2
AML21
COL2
D3
D1

FIG. 11

20

AML23
AML22
AML2
AML21
COL2

D3
D1

FIG. 12
M
AM3
AM2
BND
CDM
POR'

FIG. 13

Frequency or Counts
W'
Pore Size

FIG. 14

Frequency or Counts
Pore Size

FIG. 15

10μm

FIG. 16

10μm

FIG. 17

10μm

FIG. 18

10μm

# FIG. 19

60%
50%
40%
30%
20%
10%
0%
Expansion Rate (%)
0
5000
10000
15000
Time (min)
Comparative example
Example1

# FIG. 20

100%
95%
90%
85%
80%
Capacity Retention (%)
0
100
200
300
400
500
600
700
Cycle
Example1
Comparative example

Europäisches
Patentamt
European
Patent Office
Office européen
des brevets

# EUROPEAN SEARCH REPORT

Application Number
EP 26 15 7847

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 118 173 769 A (TANYI NEW ENERGY HANGZHOU CO LTD) 11 June 2024 (2024-06-11) * paragraphs [0021], [0022], [0028] * ----- | 1-15 | INV. H01M4/133 H01M4/134 H01M4/36 H01M4/38 H01M4/587 |
| A | CN 116 364 868 A (BTR NEW MAT GROUP CO LTD; HUIZHOU DINGYUAN NEW ENERGY TECH CO LTD) 30 June 2023 (2023-06-30) * example 1 * ----- | 1-15 | |

TECHNICAL FIELDS SEARCHED (IPC)

H01M

The present search report has been drawn up for all claims

1

| Place of search | Date of completion of the search | Examiner |
|---|---|---|
| Munich | 2 June 2026 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 26 15 7847

This annex lists the patent family members relating to the patent documents cited in the above-mentioned European search report. The members are as contained in the European Patent Office EDP file on
The European Patent Office is in no way liable for these particulars which are merely given for the purpose of information.

02-06-2026

| Patent document cited in search report | Publication date | Patent family member(s) | Publication date |
|---|---|---|---|
| CN 118173769 A | 11-06-2024 | NONE | |
| CN 116364868 A | 30-06-2023 | CN 116364868 A | 30-06-2023 |
| | | WO 2023124846 A1 | 06-07-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020250142134
- KR 1020250017188